# EUROPÄISCHE PATENTANMELDUNG

(11) **EP 2 282 141 A2**
(43) Veröffentlichungstag der Anmeldung: **09.02.2011**
(21) Anmeldenummer: 10165521.5
(22) Anmeldetag: 10.06.2010
(51) Int. Cl.: F24J 2/52

(54) **Indach-Solarkollektormontageanordnung**

(30) Priorität: 23.06.2009 DE 102009030028; 14.01.2010 DE 102010004652
(71) Anmelder: ALTEC Solartechnik AG, 07924 Crispendorf (DE)
(72) Erfinder: Mittig, Holger, 07907, Schleiz (DE)
(74) Vertreter: Meissner, Bolte & Partner

(57) **Zusammenfassung**

Die Erfindung betrifft eine Indach-Solarkollektormontageanordnung, umfassend eine Vielzahl von auf Tragschienen montierbaren flächigen Solarmodulen, wobei zwischen den Solarmodulen spaltartige Abstandsräume verbleiben. Erfindungsgemäß ist unterhalb der Solarkollektoranordnung ein Rinnensystem ausgebildet, welches die spaltartigen Abstandsräume unterdeckt, wobei weiterhin das Rinnensystem eine flüssigkeitsführende Orientierung und ein entsprechendes Gefälle aufweist.

## Beschreibung

Die Erfindung betrifft eine Indach-Solarkollektormontageanordnung, umfassend eine Vielzahl von auf Tragschienen montierbaren flächigen Solarmodulen, wobei zwischen den Solarmodulen spaltartige Abstandsräume verbleiben, gemäß Oberbegriff des Patentanspruchs 1.

Aus dem deutschen Gebrauchsmuster DE 298 05 791 U1 ist ein Indach-Solarkollektorsystem vorbekannt. Bei diesem Solarkollektorsystem wird in dem für die Kollektoren vorgesehenen Bauraum eine Unterspannung vorgenommen, wobei die Unterspannung aus schindelartig, teilweise überlappend angeordneten Platten besteht. Auf die derart gestaltete Abdichtung wird dann ein Gestell montiert, das die entsprechenden Solarkollektoren aufnimmt.

Bei der Solarmodul- und Solarkollektormontageanordnung nach der DE 20 2007 006 154 U1 wird von einer Ausnehmung in der Dachhaut ausgegangen, die annähernd der Größe der mit Solarmodulen auszurüstenden Fläche entspricht. Diese Fläche wird dann mit einer plattenförmigen Dacheindeckung mit in First-Traufe-Richtung verlaufender Profilierung versehen. Diese Dacheindeckung ist mit der eigentlichen Dachhaut regendicht verbunden. In vorhandene Profilierungen senkrecht zur First-Traufe-Richtung werden ein oder mehrere Abschnitte einer Adapterschiene eingesetzt und mit der Dacheindeckung verbunden. Die Adapterschiene weist auf der Dachseite ein Negativprofil zur Profilierung der Dacheindeckung auf und verfügt über ein oder mehrere Anschlussprofile zur Herstellung einer Verbindung mit einem Träger. Oberhalb des Trägers ist dann der Solarkollektor montierbar.

Die geschilderten Lösungen des Standes der Technik haben den Nachteil, dass trotz der vorgesehenen Indach-Montage von Solarkollektoren die Aussparung im Dach zu unterspannen ist mit der Folge einer sich insgesamt vergrößernden, abzutragenden Masse sowie eines erhöhten Montageaufwands.

Aus dem Vorgenannten ist es daher Aufgabe der Erfindung, eine weiterentwickelte Indach-Solarkollektormontageanordnung, umfassend eine Vielzahl von auf Tragschienen montierbaren flächigen Solarmodulen anzugeben, wobei die Möglichkeit besteht, auf ansonsten notwendige Unterspannungen, die vollflächig auszuführen sind, zu verzichten.

Die Lösung der Aufgabe der Erfindung erfolgt durch eine Indach-Solarkollektormontageanordnung gemäß der Merkmalskombination nach Patentanspruch 1, wobei die Unteransprüche mindestens zweckmäßige Ausgestaltungen und Weiterbildungen umfassen.

Erfindungsgemäß wird von einer Indach-Solarkollektormontageanordnung ausgegangen, welche eine Vielzahl von auf Tragschienen montierbaren flächigen Solarmodulen umfasst. Zwischen den Solarmodulen verbleiben befestigungs- und ausführungsbedingt spaltartige Abstandsräume.

Erfindungsgemäß ist unterhalb der Solarkollektoranordnung ein Rinnensystem ausgebildet, welches mindestens die spaltartigen Abstandsräume unterdeckt und wobei weiterhin das Rinnensystem eine flüssigkeitsführende Orientierung und ein entsprechendes Gefälle aufweist.

Bei einer bevorzugten Ausgestaltung der Erfindung besteht das Rinnensystem aus sich kreuzenden Profilen, wobei im Kreuzungsbereich ein Knotenprofil oder ein Knotenblech befindlich ist, welches die jeweiligen Profilenden aufnimmt, so dass aufgefangene Flüssigkeit abgeleitet werden kann.

Die Tragschienen zur Montage der Solarmodule sind bevorzugt innerhalb des Rinnensystems verlaufend angeordnet.

Das Rinnensystem kann U- oder C-förmige Flachprofile umfassen, die an den durch die Solarkollektormontageanordnung sich ergebenden Kreuzungspunkten zusammenstoßen.

Bei einer bevorzugten Ausgestaltung besitzt das Knotenprofiil in Gefällerichtung zwei parallel verlaufende Schenkel sowie winklig zur Gefällerichtung zwei Trichterschenkel, wobei der lichte Abstand der parallelen Schenkel auf die Profilmaße des Rinnensystems abgestimmt ist.

Ausgestaltend reichen die Trichterschenkel mit ihren in Gefällerichtung weisenden Enden in den Profiilraum des jeweiligen Profils des Rinnensystems hinein, so dass auch hierdurch eine sichere Führung von Feuchtigkeit, insbesondere Regenwasser, zum Zweck des Ableitens möglich ist.

Weiterhin ausgestaltend weist das Knotenprofil zwei gegenüberliegende, an die Trichterschenkel angrenzende Abwinklungen oder Abkantungen, welche rechts- und linksseitig eine unterschiedliche Höhe besitzen, auf.

Diese Abwinklungen oder Abkantungen werden dann von jeweils einem Profilende des Rinnensystems hintergriffen. Letztgenannte Maßnahme schließt aus, dass adhäsionsbedingt Wassertropfen an der Unterseite des jeweiligen Profils entlanglaufen und womöglich in den freien Dachraum hinein abtropfen.

Das Rinnensystem weist grundsätzlich längs und quer verlaufende Profile auf.

Diese Profile können, wie bereits einleitend erwähnt, als Tropf- oder Rinnenbleche ausgebildet werden, Das Material der Profile kann Kunststoff oder korrosionsgeschütztes Metall sein, wobei unter dem Aspekt möglicher negativer Taupunkteffekte einem Kunststoffmaterial der Vorzug zu geben ist.

Die in Gefällerichtung verlaufenden Schenkel der Profile hintergreifen mindestens teilweise die Unterseite der jeweiligen Solarmodule, um die Dichtwirkung zu verbessern und das Eindringen von Feuchtigkeit insbesondere bei Schlagregen zu vermeiden.

Die Gefällerichtung entspricht bei einer Ausgestaltung der Erfindung der Längsrichtung der Anordnung, wobei die in Querrichtung verlaufenden Profile Schenkel mit einer Schenkelhöhe aufweisen, die kleiner ist als die Schenkelhöhe der Profile in Längsrichtung.

Erfindungsgemäß ist darüber hinaus ein Rinnensystem zur Verwendung bei der Erstellung einer Indach-Solarkollektormontageanordnung.

Die Erfindung soll nachstehend anhand von Ausführungsbeispielen sowie unter Zuhilfenahme von Figuren näher erläutert werden.

Hierbei zeigen:
- Fig. 1: eine perspektivische Darstellung des teilweise bereits ausgeführten Rinnensystems mit Tragschienen für die noch nicht montierten Solar- module;
- Fig. 2: eine Detaildarstellung A mit erkennbarem Knotenprofil im Kreuzungs- bereich der Profile des Rinnensystems;
- Fig. 3: eine Darstellung der Ausführung des Rinnensystems mit teilweise mon- tierten flächigen Solarmodulen;
- Fig. 4: eine Detaildarstellung des Rinnensystems mit einer Ecke eines Solar- moduls, seitlich fixiert von der Tragschiene;
- Fig. 5: eine komplett mit Solarmodulen versehene Ausbildung als Indach- Anordnung;
- Fig. 6: eine perspektivische Detaildarstellung des Knotenprofils mit erkennba- rer linksseitiger und rechtsseitiger, höhenmäßig unterschiedlich aus- gebildeter Aufkantung sowie Rastnasen zur vereinfachten Montage;
- Fig. 7: eine Darstellung ähnlich derjenigen nach Fig. 6, jedoch mit bereits eingelegten zweiten Profilen mit unterschiedlicher Profilstruktur (Pro- filbreite) zum verbesserten Wasserablauf;
- Fig. 8: Detaildarstellungen der Profile 4 und 5 mit an einer Perforation ab- kantbaren Laschen zur vereinfachten Befestigung der Profile an Dach- latten und
- Fig. 9: eine Detaildarstellung des ersten Profils mit Perforation und einzelnen Laschenabschnitten.

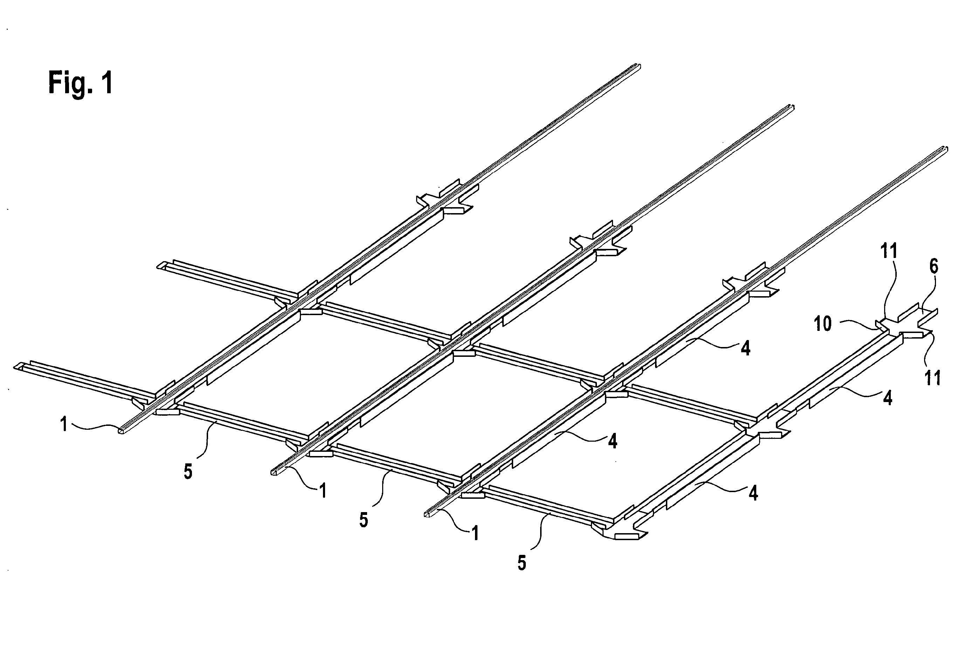

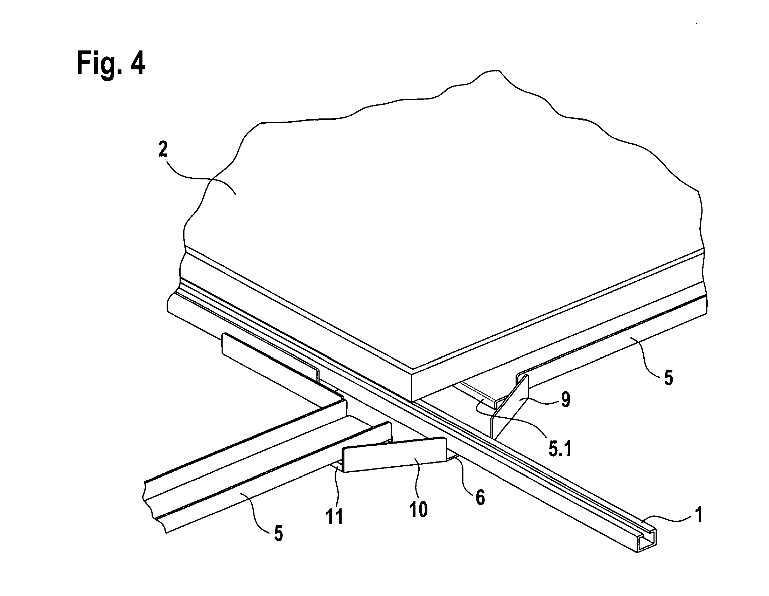

Gemäß Fig. 1 weist die erfindungsgemäße Anordnung in Gefällerichtung verlaufende, parallel orientierte Tragschienen 1. Diese Tragschienen sind als C-Profil ausführbar und dienen jeweils der lastabtragenden Fixierung einer entsprechenden Kante des Solarmoduls 2 (siehe Fig. 4).

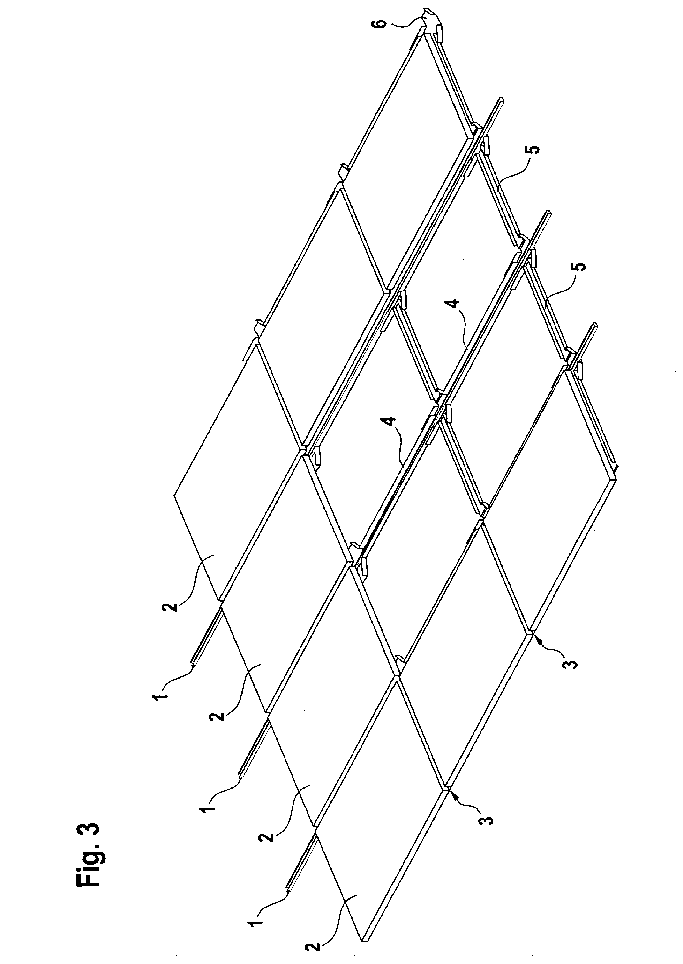

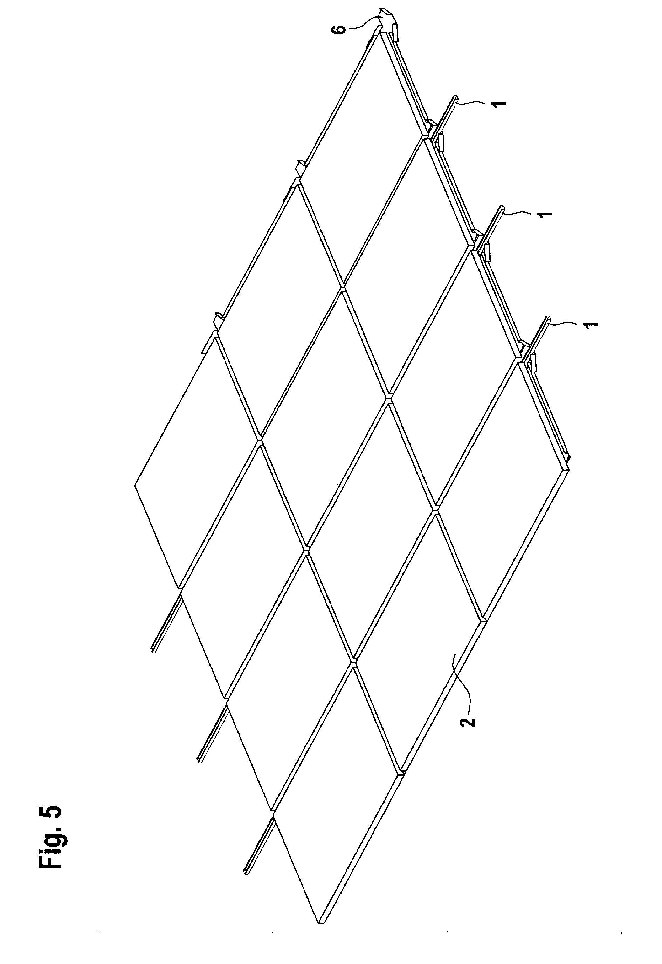

Aus den Darstellungen nach den Fig. 3 und 5 ist ersichtlich, dass zwischen den montierten flächigen Solarmodulen 2 Abstandsräume 3 verbleiben, die sowohl in Längs- und Querrichtung gemäß den figürlichen Darstellungen verlaufen.

Um in diese spaltartigen Abstandsräume 3 eindringende Flüssigkeit aufzunehmen und abzuleiten, kommt das erfindungsgemäße Rinnensystem zur Anwendung.

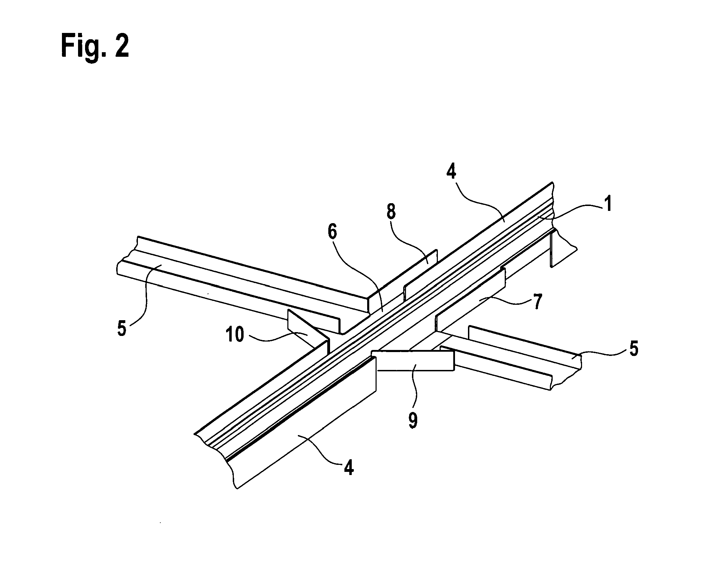

Dieses Rinnensystem umfasst in Gefälle-, d.h. in Längsrichtung verlaufende erste Profile 4 sowie in Querrichtung verlaufende zweite Profile 5. An Kreuzungspunkten, wie in der Fig. 2 dargestellt, ist ein Knotenprofil 6 befindlich, das die jeweiligen Enden der Profile 4 und 5 aufnimmt. Das Knotenprofil 6 ist so ausgebildet, dass die Profile 4, 5 zum Längenausgleich variabel verschieblich aufnehmbar sind.

Wie dargestellt, können die Tragschienen 1 innerhalb des Rinnensystems, insbesondere innerhalb der Profile 4 und des Knotenprofils 6 verlaufen.

Die Profile 4 und 5 sind als U- oder C-förmige Flachprofile ausgebildet, die, wie dargelegt, an dem durch die Solarkollektormontageanordnung sich ergebenden Kreuzungspunkten zusammenstoßen.

Das Knotenprofil 6 weist in Gefällerichtung zwei parallel verlaufende Schenkel 7 und 8 auf, die sich in Richtung der Schenkel der Profile 4 bzw. 5 erstrecken.

Weiterhin besitzt das Knotenprofil 6 Trichterschenkel 9 und 10. Der lichte Abstand der parallelen Schenkel 7 und 8 ist auf die Profilmaße des Rinnensystems, wie in der Fig. 2 ersichtlich, abgestimmt.

Die Trichterschenkel 9 und 10 nehmen Flüssigkeitsmengen in Gefällerichtung auf und leiten diese von den Profilen 5 und/oder dem oberhalb der Gefällerichtung befindlichen Profil 4 kommend in ein weiter in Gefällerichtung tiefer liegendes Profil 4 über, und zwar letztendlich bis hin zu einer nicht gezeigten Ablaufeinrichtung.

Wie aus den Figuren ersichtlich, reichen die Trichterschenkel 9 und 10 mit ihren in Gefällerichtung weisenden Enden in den Profilraum des jeweiligen Profils 4 des Rinnensystems hinein, um Systemundichtigkeiten wirksam zu verhindern.

Darüber hinaus besitzt das Knotenprofil 6 zwei gegenüberliegende, an die Trichterschenkel 9 und 10 angrenzende Abwinklungen 11 oder entsprechende Abkantungen.

Die Abwinklungen 11 oder Abkantungen werden jeweils von einem Profilende des Rinnensystems hintergriffen.

Auf die vorstehend beschriebene Anordnung aus Tragschienen 1 und dem Rinnensystem werden dann, wie aus den Fig. 3 bis 5 ersichtlich und nachvollziehbar, die einzelnen Solarmodule montiert, und zwar unter Beachtung der räumlichen Lage der Profile mit ihren als quasi Tropfblech wirkenden Feuchtigkeitsaufnahmebereichen.

Bezüglich des bei einer Ausführungsform vorgesehenen vorerwähnten Hintergreifens der Profilenden der Profile 5 sei auf die diesbezügliche Kante 5.1 an dem jeweiligen Ende des Profils 5 nach Fig. 4 aufmerksam gemacht.

Die Höhe der Schenkel der Profile 4 ist im gezeigten Beispiel größer ausgebildet als die Höhe der entsprechenden Schenkel der Profile 5. Hierdurch besteht die Möglichkeit des unterseitigen Hintergreifens bezogen auf den entsprechenden Solarmodul 2, um den Dichteffekt insbesondere bei Schlag regen zu verbessern.

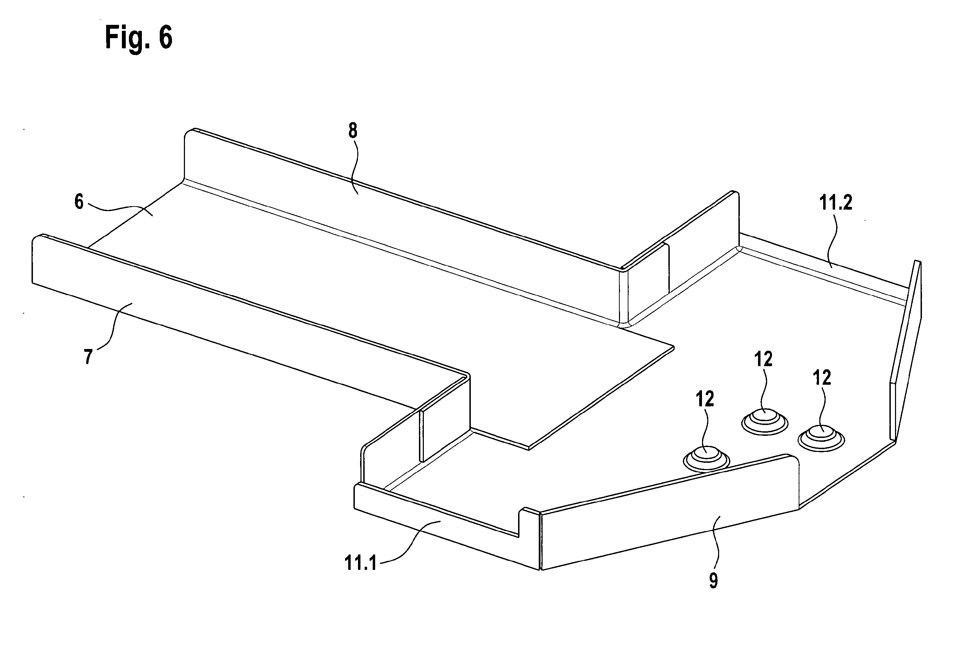

Gemäß der Darstellung nach Fig. 6 wird von einem Knotenprofil 6 ausgegangen, welches linksseitige Aufkantungen oder Abwinklungen 11.1 und rechtsseitige Abwinklungen bzw. Aufkantungen 11.2 jeweils aufweist. Die Aufkantung 11.1 ist im gezeigten Beispiel höher als diejenige, die sich rechtsseitig (11.2) befindet, ausgebildet, um bei flachen Dachneigungen einen verbesserten Wasserabfluss zu gewährleisten.

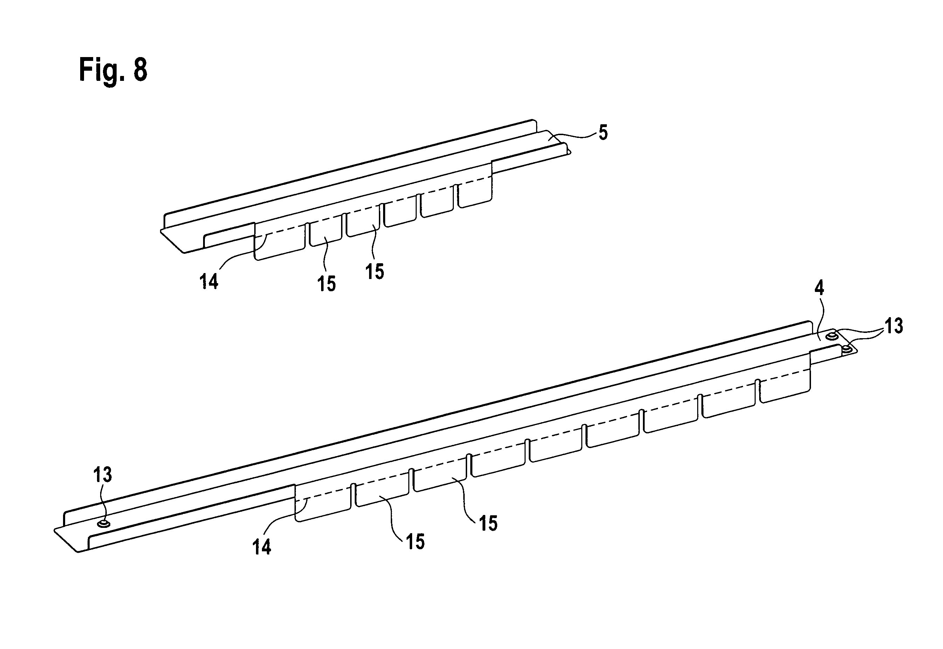

Zur vereinfachten Montage der Profile 4 bzw. 5 sind in einem Abschnitt des Knotenprofils 6 mehrere Rastnasen 12 vorgesehen, deren Form komplementär ist zu entsprechenden Nasen 13 an den Enden der entsprechenden Profile 4 (siehe Fig. 8). Hierdurch ist montageseitig ein Formschluss gegeben.

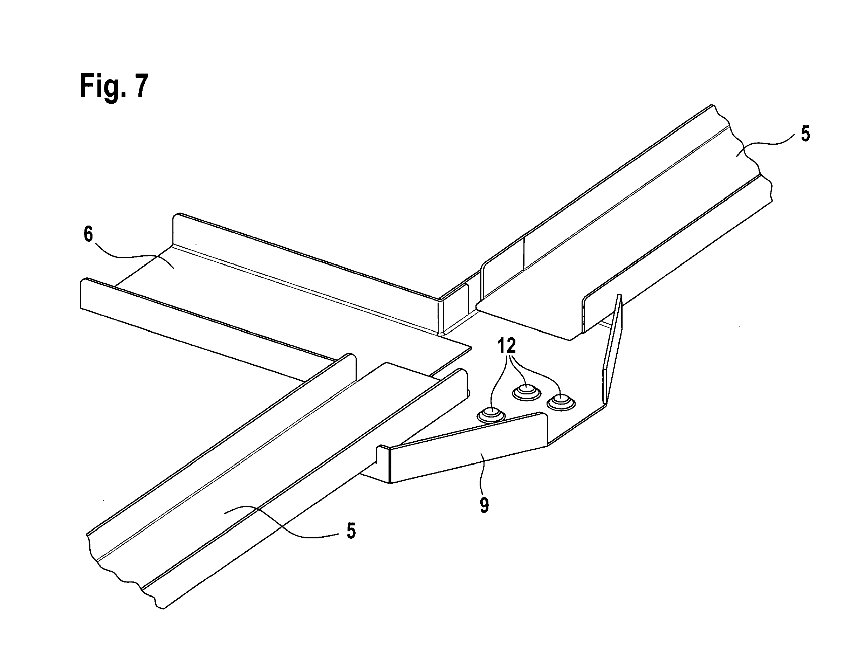

Die Fig. 7 lässt erkennen, wie die zweiten Profile 5, die eine unterschiedliche Profilbreite besitzen können, in das Knotenprofil eingebracht werden. Bei dieser Ausführungsform ist bedingt durch die Aufkantungen 11.1 und 11.2 (siehe Fig. 6) ein Hintergreifen der Profilenden nicht zwingend notwendig, wie dies bei der vorangegangenen Ausführungsform geschildert wurde.

Fig. 8 zeigt eine perspektivische Darstellung der Profile 4 und 5 einerseits mit am Profil 4 befindlichen Komplementärnasen 13 und andererseits mit einer erkennbaren Perforationslinie 14, die es ermöglicht, Laschenabschnitte 15 je nach Montagenotwendigkeit zu biegen, um eine Befestigung an Dachlatten zu gewährleisten. Die Laschen können hier als Anschlag dienen, was die Montage weiter vereinfacht.

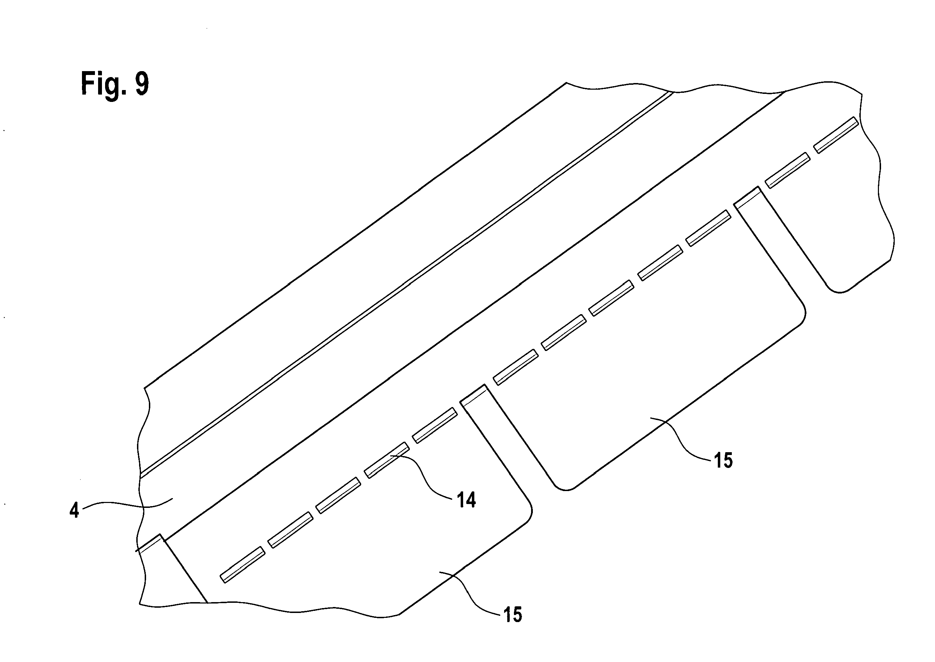

Die Perforation 14 ist gemäß Fig. 9 z.B. als schmaler Längsstanzschlitz ausgeführt, wobei die Breite der Laschen 15 so gewählt ist, dass ein entsprechendes Biegen bei Notwendigkeit werkzeugfrei vorgenommen werden kann.

Die Länge der Schenkel 7 und 8 des Knotenprofils 6 ist so gewählt, dass Profile 4 längsverschieblich und damit variabel zum Längenausgleich aufgenommen werden können. Ein Längenausgleich ist auch bezogen auf die Profile 5, wie die Fig. 7 zeigt, in einem gewissen Maße möglich.

Zusammenfassend besteht das vorgestellte Rinnensystem aus nur drei Standardkomponenten, nämlich ersten, längeren Profilen 4, zweiten, kürzeren Profilen 5 sowie dem Knotenprofil 6. Die Profilmaße selbst sind dabei so gewählt, dass rechteckförmige Solarmodule sowohl mit ihrer Längsachse horizontal als auch vertikal montiert werden können. Durch das Ausgestalten der Knotenprofile, wie vorstehend erläutert, können die ersten und zweiten Profile variabel verschiebbar aufgenommen werden, so dass unterschiedliche Modulgrößen bei der Montage zum Erhalt einer komplexen Photovoltaikanordnung eingesetzt werden können.

Die Anordnung der einzelnen Komponenten des Rinnensystems ist in der Lage, Regenwasser oder dergleichen Flüssigkeiten aufzunehmen und sicher aus dem quasi offenen Dachbereich abzuleiten. Falls gewünscht, können die Elemente des Rinnensystems noch stoffschlüssig und/oder kraftschlüssig verbunden werden.

Die in den Figuren gezeigten Profilquerschnitte sind rein beispielhaft zu verstehen. Entsprechende Abwandlungen liegen im Rahmen des fachgemäßen Handelns.

### Bezugszeichenliste

- 1: Tragschienen
- 2: Solarmodul
- 3: Abstandsräume
- 4: erste Profile
- 5: zweite Profile
- 5.1: Kante
- 6: Knotenprofil
- 7: Schenkel
- 8: Schenkel
- 9: Trichtersenkel
- 10: Trichterschenkel
- 11: Abwinklung /Aufkantung 11.1 linksseitig; 11.2 rechtsseitig
- 12: Rastnase
- 13: Komplementärnase
- 14: Perforation
- 15: Laschen

## Patentansprüche

1. Indach-Solarkollektorontageanordnung, umfassend eine Vielzahl von auf Tragschienen montierbaren flächigen Solarmodulen, wobei zwischen den Solarmodulen spaltartige Abstandsräume verbleiben,
**dadurch gekennzeichnet, dass**
unterhalb der Solarkollektoranordnung ein Rinnensystem ausgebildet ist, welches die spaltartigen Abstandsräume unterdeckt und weiterhin das Rinnensystem eine flüssigkeitsführende Orientierung und Gefälle aufweist.

2. Anordnung nach Anspruch 1,
**dadurch gekennzeichnet, dass**
das Rinnensystem aus sich kreuzenden Profilen besteht, wobei im Kreuzungsbereich ein Knotenprofil befindlich ist, welches die jeweiligen Profilenden aufnimmt.

3. Anordnung nach Anspruch 1 oder 2,
**dadurch gekennzeichnet, dass**
die Tragschienen innerhalb des Rinnensystems verlaufen.

4. Anordnung nach einem der vorangegangenen Ansprüche,
**dadurch gekennzeichnet, dass**
das Rinnensystem U- oder C-fiörmige Flachprofile umfasst, die an durch die Solarkollektoranordnung sich ergebenden Kreuzungspunkten zusammenstoßen.

5. Anordnung nach einem der Ansprüche 2 bis 4,
**dadurch gekennzeichnet, dass**
das Knotenprofil in Gefällerichtung zwei parallel verlaufende Schenkel sowie winklig zur Gefiällerichtung zwei Trichterschenkel besitzt, wobei der lichte Abstand der parallelen Schenkel auf die Profilmaße des Rinnensystems abgestimmt ist.

6. Anordnung nach Anspruch 5,
**dadurch gekennzeichnet, dass**
die Trichterschenkel mit ihren in Gefällerichtung weisenden Enden in den Profilraum des jeweiligen Profils des Rinnensystems hineinreichen.

7. Anordnung nach Anspruch 5 oder 6,
**dadurch gekennzeichnet, dass**
das Knotenprofil zwei gegenüberliegende, an die Trichterschenkel angrenzende Abwinklungen oder Abkantungen aufweist.

8. Anordnung nach Anspruch 7,
**dadurch gekennzeichnet, dass**
die Abwinklungen oder Abkantungen jeweils von einem Profilende des Rinnensystems hintergriffen sind.

9. Anordnung nach einem der vorangegangenen Ansprüche,
**dadurch gekennzeichnet, dass**
das Rinnensystem längs und quer verlaufend orientierte Profile aufweist.

10. Anordnung nach einem der Ansprüche 2 bis 9,
**dadurch gekennzeichnet, dass**
die Profile als Tropf- oder Rinnenbleche ausgebildet sind.

11. Anordnung nach einem der Ansprüche 2 bis 10,
**dadurch gekennzeichnet, dass**
die in Gefällerichtung verlaufenden Schenkel der Profile mindestens teilweise die Unterseite der jeweiligen Solarmodule hintergreifen.

12. Anordnung nach Anspruch 11,
**dadurch gekennzeichnet, dass**
die Gefällerichtung der Längsrichtung der Gesamtanordnung entspricht, wobei die in Querrichtung verlaufenden Profile Schenkel mit einer Schenkelhöhe aufweisen, die kleiner ist als die Schenkelhöhe der Profile in Längsrichtung.

13. Rinnensystem nach einem der vorgenannten Ansprüche zur Verwendung bei der Montage von Indach-Solarkollektoren.
